# EUROPEAN PATENT SPECIFICATION

(11) **EP 3 189 170 B1**
(45) Date of publication and mention of the grant of the patent: **21.08.2019**
(21) Application number: 15781767.7
(22) Date of filing: 03.09.2015
(51) Int. Cl.: C22B 7/00, C25C 1/12, C22B 11/02, C22B 15/00

(54) **PROCESS AND APPARATUS FOR METAL REFINING**
VERFAHREN UND VORRICHTUNG ZUM RAFFINIEREN VON METALL
PROCÉDÉ ET APPAREIL POUR LE RAFFINAGE DE MÉTAUX

(30) Priority: 03.09.2014 NL 2013407
(43) Date of publication of application: 12.07.2017
(73) Proprietor: Elemetal Holding B.V., 3196 KD Vondelingenplaat, Rotterdam (NL)
(72) Inventor: THUS, Silvan Johan, NL-3196 KD Vondelingenplaat Rotterdam (NL); KOOIJMAN, Dirkjan, NL-3196 KD Vondelingenplaat Rotterdam (NL)
(74) Representative: V.O.
(86) International application number: PCT/NL2015/050612
(87) International publication number: WO 2016/036247

(56) References cited:
- WO-A1-2011/074948
- DE-A1- 2 737 928
- US-A- 5 620 586
- ANDREA MECUCCI AND KEITH SCOTT: "Leaching and electrochemical recovery of copper, lead and tin from scrap printed circuit boards", JOURNAL OF CHEMICAL TECHNOLOGY AND BIOTECHNOLOGY, WILEY, vol. 77, no. 4, 1 April 2002 (2002-04-01), pages 449-457, XP001577446, ISSN: 0268-2575, DOI: 10.1002/JCTB.575 [retrieved on 2002-02-08]
- HAIT J ET AL: "Processing of copper electrorefining anode slime: a review", TRANSACTIONS - INSTITUTION OF MINING AND METALLURGY. SECTION C.MINERAL PROCESSING AND EXTRACTIVE METALLURGY, LONDON, GB, vol. 118, no. 4, 1 December 2009 (2009-12-01), pages 240-252, XP008178278, ISSN: 0371-9553, DOI: 10.1179/174328509X431463
- Mark E. Schlesinger et al.: "Extractive Metallurgy of Copper", 2011, Elsevier, XP002751695, page 253 - page 253
- JIRANG CUI ET AL: "Metallurgical recovery of metals from electronic waste: A review", JOURNAL OF HAZARDOUS MATERIALS, vol. 158, no. 2-3, 30 October 2008 (2008-10-30), pages 228-256, XP055467290, AMSTERDAM, NL ISSN: 0304-3894, DOI: 10.1016/j.jhazmat.2008.02.001

## Description

The invention is directed to a process and apparatus for metal refining, in particular for refining a mixture of conductive particles, such as mixtures of metallic particles. More particularly, the invention relates to a process and apparatus to separate concentrated metal streams, such as copper cathodes, zinc solutions or noble metal concentrates, from mixtures of heavy non-ferrous particles, containing for example copper, zinc, lead, and noble metals, with the particle sizes less than *e.g.* 40 mm or less than *e.g.* 15 mm or less than *e.g.* 5 mm, preferably with particles sizes smaller than 1 µm or smaller than 100 µm excluded.

Mixtures containing heavy non-ferrous particles are generally produced by shredding or incinerating waste (including waste to energy incineration) and secondary streams, such as municipal refuge and scrapped cars. From the generated mixture magnetic particles and low density materials are removed. The ferromagnetic particles are commonly removed with magnetic belt separators, while the low density materials such as plastics are often removed by some combination of eddy current separators and density separators. Lighter non-ferrous metals can be removed with heavy medium separators (as for instance disclosed in EP2412452), magnetic fluid separators or a variety of other well-known processes such as gravity separation, sensor sorting. In this way, a mixture of heavy non-ferrous particles is produced. Its composition depends strongly on the feed of the shredding or incineration process.

In the art, the mixture of heavy non-ferrous particles is usually sold to pyrometallurgical metal refiners. These refiners separate and upgrade the mixture by different processes which can contain melting, adding virgin metals, oxidizing at elevated temperatures and casting anodes, which are only then electrolytically refined. The value of the mixture of heavy non-ferrous particles is this way therefore generally lower than the sum of the value of the pure metals in the mixture. Also the pyrometallurgical processes have a high energy consumption and require large feed streams to be economical, which results in distant transporting of the mixture to central locations. The present invention does not require casting of anodes, adding virgin etcetera.

Some existing hydrometallurgical methods, as for instance disclosed in US 7,799,184 purify valuable metals from mixtures of conductive particles by electrochemical decomposition of powders. However, this method is not versatile since less noble metals are not separated from the mixture of conductive particles. The presence of less noble metals hampers the purification of the desired metal by build-up of less noble metals in the electrolyte.

In alternative hydrometallurgical methods as *e.g.* disclosed in WO 2011/074948, WO 98/58090, US 2009/0074639, US 2006/0011014, and US 2009/0183997, valuable metals of interest are purified from mixtures using a combination of leaching and electrowinning. The metal of interest is first dissolved in a leaching step and subsequently recovered from solution by a electrowinning step. It would be desirable to make these processes more energy efficient and find a solution to the liquid waste stream created in these processes.

The present invention seeks to provide a process and an apparatus to purify metals, including but not limited to copper, zinc, lead, gold and silver from mixtures of conductive particles in order to give them more value and to reduce energy consumption compared to currently known processes. Also the invention aims to be more suitable for a smaller feed stream, thereby preventing distant transport of the mixture. Furthermore, production of environment-polluting residues is minimized.

It was found that these objects can be met by a process for recovering a metal of interest from a mixture of conductive particles comprising said metal of interest, which process comprises:
a) - feeding said mixture of conductive particles to a separation unit, wherein a less noble metal is separated from the metal of interest by selective leaching, thus producing a concentrated stream comprising the less noble metal and a conductive stream comprising the metal of interest;
b) - followed by a step of separating the metal of interest from said conductive stream by electro-refining, thus producing a stream comprising the metal of interest and a stream of concentrated conductive materials.

In the second step (b) of the present invention, the metal of interest can be plated onto cathodes using an electrical current whereby said conductive stream comprising the metal of interest is used as anode. To great advantage, this anode might be placed vertically using for example two perforated plates to hold the conductive stream, through which the electrolyte is pumped. A vertically placed anode allows for a good electrical field in combination with a vertical cathode, thereby producing high quality plated metal with little impurities. Preferably, the recovered metal of interest on the cathode has a purity of more than 95 wt.%, more preferably more than 98 wt.%, most preferably more than 99.5 wt.%.
Figure 1 is a schematic representation of a particular embodiment of the present invention.
Figure 2 is a schematic representation of an embodiment of an apparatus in accordance with the present invention.

In the present invention, first the less noble metals is separated from the mixture (step a), thereby making the process more versatile. As a result, the process may also be used to treat mixtures comprising these less noble metals.

Advantageously, the present invention enables concentration of metals preferably by plating them onto cathodes, separate as fine particles or separate as large particles, such that the separation of metals is more facile and the energy intensive leaching/recovery cycle is not necessary for the metals of interest.

The present invention does not use a two-step process for the separation of metals of interest, *i.e.* leaching the metal of interest followed by electrowinning. Instead, a concentrated metal stream, comprising the metals of interest, is produced directly from a conductive stream and in the same unit, preferably by electro-refining, thereby decreasing energy consumption. The leaching in the present invention involves the less noble metal is are not electrolytically recovered (*i.e.* selective leaching).

In the present invention, the degree of nobility of metals is related to the metal of interest in accordance with the galvanic series in the environment. For example, if the metal of interest is copper, zinc would be a less noble metal and gold would be a more noble metal.

For purpose of clarity and concise description, the metal of interest may be one or more metals of interest. Likewise, the less noble metal may be one or more less noble metals. The more noble metal may be more than one more noble metal.

In a preferred embodiment, the process of the present invention comprises an additional step c) wherein a more noble metal is separated as fine particles from said concentrated conductive stream, thus producing said stream of more noble metals and a stream of concentrated conductive particles.

In a particular embodiment of the present invention, said metal of interest comprises copper.

In another particular embodiment of the present invention, said less noble metal comprises zinc.

In yet another particular embodiment of the present invention, said more noble metal comprises gold.

In another preferred embodiment, in an additional step of the present invention, the spent acids or complexing agents are treated with the stream of concentrated conductive particles, so that the acids or complexing agents can be re-used.

The metal of interest is present in a mixture of conductive particles, which is used as a feed for the present invention. Typically, the mixture of conductive particles is a concentrate that originates from ash (*e.g*. bottom ash) from an incineration process (including waste to energy incineration) or from a shredding process of *e.g.* scrapped cars. Preferably, the mixture of conductive particles is a non-ferrous mixture of conductive particles since ferrous particles are typically removed from waste before or after the incineration of the waste.

The mixture of conductive particles is thus generally a secondary (or non-primary) source of the metal of interest. Metal ore that is extracted in the traditional mining industry is herein considered as the primary source for the metal of interest. It may be appreciated that the mixture of conductive particles originating from secondary sources differs significantly from ore mixtures from the mining industry.

The mixture of conductive particles in accordance with the present invention commonly comprises a large number of different metals, *e.g.* up to about 18 different metals. Typically, the mixture of conductive particles comprises three or more metals, such as between five to twenty different metals in amount of more than 0.1 ppm of the total atomic composition.

The mixture typically comprises 20 to 80 wt.%, preferably 30 to 60 wt.% copper (based on the total mass of the dry solids in the mixture of conductive particles).

The mixture of conductive particles further typically comprises 5 to 40 wt.%, preferably 10 to 30 wt.% zinc (based on the total mass of the dry solids in the mixture of conductive particles).

Typically waste streams from *e.g.* shredders or municipal waste treatment facilities also comprises small amounts of noble metals such as silver and gold. Consequently, the mixture of conductive particles in accordance with the present invention generally comprises gold in an amount of 1 to 300 ppm, preferably in an amount of 10 to 100 ppm (based on the total mass of the dry solids in the mixture of conductive particles). The mixture typically further comprises silver in an amount of 50 to 4000 ppm, preferably in an amount of 1000 to 2500 ppm (based on the total mass of the dry solids in the mixture of conductive particles).

Typically, the mixture of conductive particles comprises at least three, preferably more than ten, most preferably more than twelve different metals, which are preferably selected from the group consisting of silver, gold, platinum, palladium, lead, copper, nickel, zinc, tin, alumina, iron, cadmium, beryllium, chromium, cobalt, manganese, antimony and vanadium.

It may be appreciated that the mixture of conductive particle may also comprise non-conductive and/or non-metallic particles such as silicates originating e.g. from glass waste as long as the conductive properties of the mixture as a whole are not rendered null.

The metal of interest may be present in their metallic or oxidized form, as long as it is still conductive and may be (further) oxidized. The present inventors realized that typically the metals of interest, in particular copper, are frequently present in metallic form and that in order to select the metals and to concentrate them, it is very important to select the right acid or complexing agents or the right combination of acids or complexing agents, both with the right pH.

Furthermore, it is highly advantageous to select the right voltage for the electrochemical recovery.

In the first step (a) of the present invention, the less noble metal is preferably separated from a conductive supply stream (herein also referred to as the mixture of conductive particles) in the presence of a lixiviant. The lixiviant typically contains one of more acids or complexing agents, *e.g.* sulfuric acid, hydrochloric acid, nitric acid, ammonia, cyanide, hydroxide or the like. Said less noble metal is chemically converted into a salt that is dissolved in aqueous media, such as water. This process may be referred to as selective leaching. The metal of interest that is to be recovered is not converted into an in aqueous media soluble salt. Step a) thus involves selective leaching of the less noble metal to separate this from at least one metal of interest. This results in high less noble metal concentrations. For example in zinc concentrations of 20-200 g/L in a sulfate solution with a pH range of 0-1. Preferably this step is operated at elevated temperatures, more specifically at temperatures around 50°C. Typically the following reaction occurs, wherein zinc is used as an example:

Zn(s) + 2H⁺(aq) --> H₂(g) + Zn²⁺(aq) (1)

After the less noble metal is converted into in aqueous media soluble metal salts and removed as a liquid stream, preferably to a considerable extent, *e.g.* 75% (based on weight) or more, the metals of interest is separated from said conductive stream (step b of the present invention), preferably to a considerable extent, *e.g.* 70% to 90% (based on weight). This is preferably done with an electro-refining step. The conditions in the electro-refining step need to be chosen such that a selection and purification of the metal of interest is achieved.

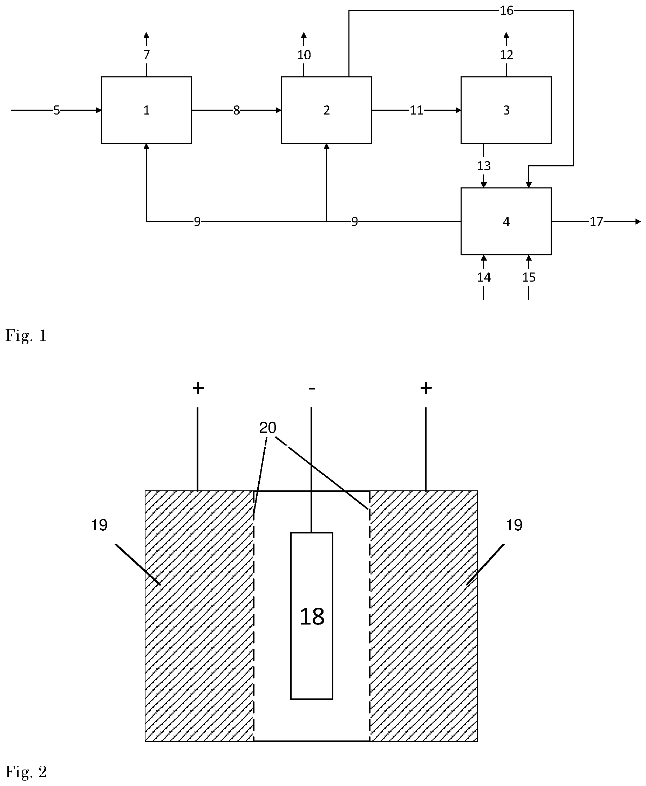

Electro-refining is a method to purify a mix of different metals. This step is typically carried out using an electrolytic cell, preferably wherein one or more pairs of negative cathodes and positive anodes are present. More preferably, the number of anodes is one more than the number of cathodes, such that the metal of interest may be plated on both sides of each cathode (figure 2). Said conductive stream (*i.e.* the stream obtained after the separation of the less noble metal), may be used as anode. At the anode, one or more metals of interest will dissolve as ions in the electrolyte. Typically, the electrolyte comprises sulfuric acid, hydrochloric acid, nitric acid ammonia, cyanide, hydroxide or a combination thereof. The dissolved ions of the metal of interest are then reduced on the cathode in the same unit, thus forming a metal deposit on the cathode. The metal deposit on the cathode can later be easily removed. The electro-refining process is preferably driven by a direct current or by a reverse pulse modulated current. For copper, the voltage is preferably between 0.01 V and 1 V, more preferably between 0.3 and 0.5 V.

The used electrolyte is preferably 20-30 wt% sulfuric acid with a concentration of ions of the metal of interest (*e.g*. Cu²⁺ and/or ions of other metals of interest) between 20 and 45 g/L and/or with a pH range of -0.5 and 0.5. Electro-refining is preferably performed at elevated temperatures, more preferably at temperatures around 50°C.

By illustration, the following two half-reactions may take place, wherein copper is used as an example:
at the anode: Cu(s) --> Cu²⁺ + 2e⁻,
and at the cathode: Cu²⁺ + 2e⁻ --> Cu(s).

The concentration of ions of the metal of interest in the electrolyte needs to be kept constant or substantially constant. However, these ions are expended as long as there are less noble metals present in the anode resulting in spent electrolyte. For instance zinc versus copper, the leaching of zinc follows the reaction: Zn(s) + Cu²⁺ --> Zn²⁺ + Cu(s), which depletes the electrolyte.

By illustration, the following two half-reactions may take place for zinc and copper:
at the anode: Zn(s) --> Zn²⁺ + 2e⁻,
and at the cathode: Cu²⁺ + 2e⁻ --> Cu(s).

For this reason the spent electrolyte is additionally reprocessed in a step of the process of the present invention . In this step the metal of interest is dissolved in the spent electrolyte, in order to compensate for the depletion of ions from the electrolyte (this step may also be referred to as regeneration of the electrolyte). This is preferably done by adding an electron acceptor, *e.g.* an oxygen containing gas, such as air, to a bed of particles containing a dissolvable metal of interest.

After the electro-refining step b), the stream of concentrated conductive materials typically still comprise part of the metal of interest (*i.e.* the part that is not yet recovered in step b), also referred to as notyet recovered metal of interest), typically in an amount of 10-30% of the amount of the metal of interest in the mixture of conductive particles. Preferably, this not yet recovered metal of interest is used for the regeneration of the electrolyte. For example, a packed bed of particles containing dissolvable not yet recovered metal of interest and an electron acceptor are contacted with the spent electrolyte in which the metal of interest dissolves. By illustration, the following two half-reactions may take place by addition of electron acceptor in order to compensate for the depletion of the electrolyte. For example by using an oxygen containing gas as electron acceptor and copper as the metal of interest:
anodic: Cu(s) --> Cu²⁺ + 2e⁻,
cathodic: O₂ + 2H⁺ + 4e⁻ --> 2OH⁻.

Since the reaction takes place under acidic conditions, it may be appreciated that the two-half reactions may also be represented by:
anodic: Cu(s) --> Cu²⁺ + 2e⁻,
cathodic: O₂ + 4H⁺ + 4e⁻ --> 2H₂O

To great advantage the dissolution of the metal of interest in the spent electrolyte and thus the regeneration of the electrolyte is accelerated by using ammonia as catalyst. To great advantage this dissolution is accelerated by elevating the temperature to at least 50°C.

In the concentrated conductive stream, typically high value metals remain present that are more noble than the metal of interest. The concentrated conductive stream that is obtainable by the present invention is very characteristic in its chemical composition, in particular in case the mixture of conductive particles originates from secondary sources (*vide supra*).

The process in accordance with the present invention typically results in a concentrated conductive stream that comprises silver and/or gold. In a preferred embodiment, the concentrated conductive stream comprises at least three, preferably more than ten, most preferably more than twelve different metals, preferably selected from the group consisting of silver, gold, platinum, palladium, lead, nickel, tin, alumina, iron, cadmium, beryllium, chromium, cobalt, manganese, antimony and vanadium. More preferably, the concentrated conductive stream comprises at least gold and/or silver.

The concentrated conductive stream preferably comprises less than 20 wt.%, more preferably less than 10 wt.% copper and/or less than 10 wt.%, more preferably less than 5 wt.% zinc (based on the total mass of the dry solids in concentrated conductive stream).

Preferably, the concentrated conductive stream comprises gold in an amount of more than 150 ppm, preferably more than 500 ppm. Typically, the concentrated conductive stream comprises gold in an amount of up to 5000 ppm, more preferably in an amount of up to 10000 ppm (based on the total mass of the dry solids in the concentrated conductive stream).

Preferably, the concentrated conductive stream comprises silver in an amount of more than 4000, preferably more than 10000 ppm. Typically, the concentrated conductive stream comprises silver in an amount of up to 25000 ppm, more preferably in an amount of up to 100000 ppm (based on the total mass of the dry solids in the concentrated conductive stream).

Exact concentrations and even the presence of the metals may vary based on the chemical composition of the feed stock (*i.e.* mixture of conductive particles). Metals that are typically present in the concentrated conductive stream are provided in table 1 (concentrations based on the total mass of the dry solids in the concentrated conductive stream). For sake of conciseness and clarity, all metals are given in a single overview. However, it may be appreciated that, for the reasons provided above, the composition of the concentrated conductive stream may be any combination of any of the given metals in any of the given concentrations.

The concentration of in particular nickel, iron, tin, aluminum, cadmium, beryllium, cobalt, manganese, antimony and/or vanadium are generally lower than the concentration of other metals and may vary significantly on the type and composition of the source material used for the present invention. Concentrations are therefore indicated as either small or trace (*i.e.* less than small) amounts.

**Table 1**

| | | | range | |
|---|---|---|---|---|
| Metal | Conc entration | about | min | max |
| Ag | [ppm] | 6330 | 2500 | 15000 |
| Au | [ppm] | 250 | 40 | 800 |
| Pt | [ppm] | 7 | 0.2 | 30 |
| Pd | [ppm] | 42 | 1 | 160 |
| Pb | [%] | 16 | 21.5 | 50 |
| Cu | [%] | 17 | 8 | 30 |
| Cr | [ppm] | 1568 | 200 | 10000 |
| Zn | [%] | 7 | 2.0 | 15 |
| Ni | Small amounts | | | |
| Fe | Small amounts | | | |
| Sn | Trace amounts | | | |
| Al | Trace amounts | | | |
| Cd | Trace amounts | | | |
| Be | Trace amounts | | | |
| Co | Trace amounts | | | |
| Mn | Trace amounts | | | |
| Sb | Trace amounts | | | |
| V | Trace amounts | | | |

From the concentrated conductive stream, which remains after the electro-refining step, additionally a more noble metal may be separated (*i.e.* step c) by for example filtration. The present inventors realized that such a more noble metal of interest, *e.g.* gold or silver, is usually present as a coating of the conductive particles. When the conductive particles are partially dissolved in prior leaching and/or electro-refining steps, small particles of this more noble metal will remain. These small particles are then concentrated by using a filter. This is preferably done during the electro-refining step, by circulating the electrolyte through the electrolytic cell. The electrolyte will transport the small particles out of the electrolytic cell. A concentrated noble metal stream can be obtained by filtering the electrolyte. For instance, gold may typically be obtained in a concentration of 2000 to 8000 ppm (based on the total mass of the concentrated noble metal stream).

In a preferred embodiment of the present invention, part of the spent electrolyte from step b) is used in step a) as lixiviant. This way buildup of ions of the less noble metal(s), *e.g.* zinc, in the electrolyte is prevented. In this case the reaction in step b) initially changes, whereby ions of the metal of interest are cemented onto the particles, and are thus not lost as aqueous media soluble salt, because they can be extracted again in step b) or d). Typically the following reaction occurs, wherein copper and zinc are used as an example:

Zn(s) + Cu²⁺(aq) --> Cu(s) + Zn²⁺(aq) (2)

Additionally, the inventors realized that in the remaining concentrated conductive stream, high concentrations of metals, such as noble metals and lead, are present that are not removed during the steps a) and b) of the present process. This remaining solid stream is more concentrated in these metals after steps a and b of the present process, thereby making the mixture more suitable for further refining. This refining is commonly done by pyrometallurgical processes. However, some initial refining can be achieved by a novel step. Accordingly, in a preferred embodiment of the present invention steps a) and b) are followed by a further refining step, thereby separating at least one more noble metal of interest from said concentrated conductive stream, thus producing a stream of concentrated more noble metals and a second stream of concentrated conductive materials. It may be appreciated that in case said step of further refining is applied, step c) may be performed on the second stream of concentrated conductive materials.

In figure 1 a schematic representation of a particular embodiment of the present invention is depicted. A mixture of conductive particles (5) that is produced by for example an incinerator or shredder is fed to the separation unit (1), wherein a less noble metal (7), *e.g.* zinc, is separated from other metals in a dissolved form by feeding the lixiviant (9) wherein the less noble metal will dissolve (selective leaching). The lixiviant (9) originates from the treatment of the spent electrolyte in the regeneration process (4), this is preferred but not required. The remaining solids (8) (resulting from the selective leaching in unit 1 and also referred to herein as the conductive stream) are fed to an electro-refining unit (2), where a metal of interest, e.g. copper, is separated (10). The (regenerated) electrolyte (9) originates from the treatment of the spent electrolyte (4), this is preferred but not required.

In a typical example of the electro-refining unit (figure 2), the anodes, comprising or consisting of solids (19) (also referred herein to the conductive stream), and a cathode plate, comprising a suitable metal, *e.g.* stainless steel or copper, (18) are used as electrodes. The anode keeps its shape because it is supported by two perforated plates (20) of a suitable material, *e.g.* stainless steel or PVC. Plates 20 form a compartment comprising the conductive stream (*i.e.* the anode) that is spaced from the cathode.

In a particular embodiment, multiple anodes and cathodes are used in an alternating setup. Preferably the solids which remain after the electrolytic treatment in electro-refining unit 2 (also referred to herein as the stream of concentrated conductive material), are used in the electrolyte treatment step (16). The spent electrolyte (11) is fed to a filtration unit (3), where a more noble metal of interest, e.g. gold, is filtrated as particles from the spent electrolyte (11). Then the filtrated spent electrolyte (13) is fed to an electrolyte treatment unit (4). An example of a method to treat the spent electrolyte is to blow an oxygen-containing gas, *e.g.* air, (14) through the spent electrolyte (13) while it is in contact with particles that contain dissolvable metal(s) of interest (*i.e.* not yet recovered metal of interest), *e.g.* particles in the stream of concentrated conductive materials which remain after the electro-refining step (16). New (fresh) acid is added in this unit (15) in order to compensate for the acid which leaves the system with the pregnant lixiviant (7). If the remaining particles resulting from the electro-refining unit (16) (stream of concentrated conductive materials comprising non-recovered metal of interest) are used as the source for the ions to regenerated the electrolyte in the electrolyte treatment unit (4), then the remaining solids resulting from this unit (4) contain a high concentration of other conductive particles, *i.e.* the more noble metal *e.g.* lead and silver (17).

In a further aspect of the present invention, the inventor found that a particular apparatus may be used that is suitable for carrying out the present invention.

The apparatus comprises a dissolution unit, which comprises an opening for feeding a conductive supply stream, in particular a heavy non-ferrous mixture of particles produced by shredding or incinerating waste and secondary streams; a refining unit, which comprises a duct for receiving the effluent of said dissolution unit; the apparatus preferably further comprises an electrolyte filtration unit, which comprises a duct for receiving the effluent of said refining unit.

Preferably, the apparatus further comprises an electrolyte treatment unit that comprises a duct for receiving the spent electrolyte. Typically said refining unit is an electro-refining unit which comprises perforated plates (typically based on non-conductive materials such as PVC or coated stainless steel) that form a compartment comprising the conductive stream as anode. Adjacent the compartment - and in case of multiple compartments, in between two compartments - a cathode is present. The electro-refining unit preferably comprises one or more vertical anodes and one or more cathodes preferably spaced in such a way that the conductive stream can be prevented from entering the space between each compartment when feeding with a tool and a short circuit is prevented.

In a preferred embodiment, the units are the size of a pallet box, for example, the floor dimensions are near to those of an EURO pallet or an GMA pallet, with a height between 600 and 1200 mm. Also the flooring of the unit is such that it can be lifted and rotated upside down by a forklift, or other jacking device. This way the remaining solids can be easily unloaded from the unit.

In a preferred embodiment, the perforated plates which support the anodes are spaced in such a way, that, when the unit is filled from the top, a sieve or lattice can be used to guide the mixture of conductive particles between the perforated plates at the anode side and not between the perforated plates at the cathode side.

For the purpose of clarity and a concise description features are described herein as part of the same or separate embodiments, however, it will be appreciated that the scope of the invention may include embodiments having combinations of all or some of the features described within the scope of the claims.

## Claims

1. Process for recovering a metal of interest from a mixture of conductive particles containing said metal of interest, as well as at least one less noble metal, which process comprises:
a) feeding said mixture of conductive particles to a separation unit, wherein the less noble metal is separated by selective leaching, thus producing a concentrated stream comprising the less noble metal and producing a conductive stream comprising the metal of interest;
b) followed by a step of separating the metal of interest from said conductive stream by electro-refining, thus producing a stream comprising the metal of interest and a stream of concentrated conductive materials.

2. Process according to claim 1, which is followed by a step c) of separating at least one more noble metal from said concentrated conductive stream, thus producing a stream of concentrated more noble metals and a second stream of concentrated conductive materials.

3. Process according to claim 1 or 2, wherein said step of separating one or more metals of interest from said conductive stream by electro-refining is performed in an electrochemical cell, comprising an anode and a cathode, in the presence of an electrolyte comprising one or more acids or complexing agents, wherein said conductive stream is the anode and the metal of interest is plated on the cathode.

4. Process according to claim 3, wherein the electrolyte is spent and at least part of the spent electrolyte is used in the separation of the less noble metal.

5. Process according to claim 3 or 4, followed by a step of treating at least part of the spent electrolyte and reusing the resulting treated electrolyte in the electrochemical cell.

6. Process according to any of claims 2 - 5, wherein said step of separating the more noble metal comprises a filtration.

7. Process according to any of the previous claims, wherein said step of separating the less noble metal comprises dissolving and oxidizing the less noble metals by the use of one or more acids or complexing agents.

8. Process according to any one of the claims 5 to 6, wherein said step of treating at least part of the spent electrolyte comprises dissolution and oxidation of the (not yet recovered) metals of interest by the use of an electron acceptor, wherein said electron acceptor is preferably an oxygen containing gas, more preferably air.

9. Process according to any of the previous claims, wherein said one or more acids or complexing agents comprised in the electrolyte are selected from the group consisting of H₂SO₄, HCl, HNO₃, NH₃, CN-, OH- and combinations thereof.

10. Process according to any of the previous claims, wherein said mixture of conductive particles containing said the metal of interest comprises a heavy non-ferrous mixture of particles originating from shredding or incinerating waste and secondary streams, whereby preferably said mixture of particles comprises copper, zinc, and gold, and the particle sizes are preferably less than 40 mm, more preferably less than 15 mm, most preferably less than 3 mm, and whereby preferably no particles smaller than 1 µm, more preferably smaller than 100 µm are present.

11. Process according to any of the claims 2 - 10, wherein said metal of interest comprises copper, said less noble metal comprises zinc and/or said more noble metal comprises gold.

12. Apparatus for carrying out a process according to any of claims 1-11, comprising:
- a dissolution unit, which comprises an opening for feeding a conductive supply stream, in particular a heavy non-ferrous mixture of particles produced by shredding or incinerating waste and secondary streams;
- a refining unit, which comprises a duct for receiving the effluent of said dissolution unit;
- preferably further comprising an electrolyte filtration unit, which comprises a duct for receiving the effluent of said refining unit.

13. Apparatus according to claim 12, further comprising an electrolyte treatment unit, which comprises a duct for receiving the spent electrolyte.

14. Apparatus according to one any of the claims 12 to 13, wherein said refining unit is an electro-refining unit which comprises multiple perforated plates forming one or more compartments which contain the conductive stream as anode, wherein adjacent to one or more compartment a cathode is present, preferably spaced in such a way that the conductive stream can be prevented from entering the space between the compartment and the cathode when feeding with a tool.

15. Apparatus according to one any of the claims 12 to 14, which comprises of one or more units dimensioned the size of a pallet box, fitted with openings such that it can be lifted and rotated upside down by a forklift, or other jacking device.

## Patentansprüche

1. Verfahren zum Zurückgewinnen eines Metalls von Interesse aus einer Mischung von leitfähigen Partikeln, enthaltend das Metall von Interesse, sowie wenigstens ein weniger edles Metall, wobei das Verfahren umfasst:
a) Zuführen der Mischung von leitfähigen Partikeln zu einer Trenneinheit, wobei das weniger edle Metall durch selektives Auslaugen abgetrennt wird, dadurch erzeugend einen konzentrierten Strom, umfassend das weniger edle Metall, und erzeugend einen leitfähigen Strom, umfassend das Metall von Interesse;
b) gefolgt von einem Schritt des Abtrennens des Metalls von Interesse von dem leitfähigen Strom durch Elektro-Raffinieren, dadurch erzeugend einen Strom, umfassend das Metall von Interesse und einen Strom konzentrierter leitfähiger Materialien.

2. Verfahren nach Anspruch 1, das gefolgt ist von einem Schritt c) des Abtrennens wenigstens eines edleren Metalls von dem konzentrierten leitfähigen Strom, dadurch erzeugend einen Strom konzentrierter edlerer Metalle und einen zweiten Strom konzentrierter leitfähiger Materialien.

3. Verfahren nach Anspruch 1 oder 2, wobei der Schritt des Abtrennens eines oder mehrerer Metalle von Interesse von dem leitfähigen Strom durch Elektro-Raffinieren in einer elektrochemischen Zelle, umfassend eine Anode und eine Kathode, in Gegenwart eines Elektrolyten, umfassend eine oder mehrere Säuren oder Komplexbildner, durchgeführt wird, wobei der leitfähige Strom die Anode ist und das Metall von Interesse auf die Kathode plattiert wird.

4. Verfahren nach Anspruch 3, wobei der Elektrolyt verbraucht wird und wenigstens ein Teil des verbrauchten Elektrolyten in der Abtrennung des weniger edlen Metalls verwendet wird.

5. Verfahren nach Anspruch 3 oder 4, gefolgt von einem Schritt des Behandelns wenigstens eines Teils des verbrauchten Elektrolyten und Wiederverwenden des resultierenden behandelten Elektrolyten in der elektrochemischen Zelle.

6. Verfahren nach einem der Ansprüche 2 - 5, wobei der Schritt des Abtrennens des edleren Metalls eine Filtration umfasst.

7. Verfahren nach einem der vorhergehenden Ansprüche, wobei der Schritt des Abtrennens des weniger edlen Metalls Auflösen und Oxidieren der weniger edlen Metalle durch die Verwendung einer oder mehrerer Säuren oder Komplexbildner umfasst.

8. Verfahren nach einem der Ansprüche 5 bis 6, wobei der Schritt des Behandelns wenigstens eines Teils des verbrauchten Elektrolyten Auflösung und Oxidation der (noch nicht zurückgewonnenen) Metalle von Interesse durch die Verwendung eines Elektronenakzeptors umfasst, wobei der Elektronenakzeptor vorzugsweise ein sauerstoffhaltiges Gas, bevorzugter Luft, ist.

9. Verfahren nach einem der vorhergehenden Ansprüche, wobei die eine oder mehreren Säuren oder Komplexbildner, umfasst in dem Elektrolyten, ausgewählt sind aus der Gruppe bestehend aus H₂SO₄, HCl, HNO₃, NH₃, CN-, OH- und Kombinationen davon.

10. Verfahren nach einem der vorhergehenden Ansprüche, wobei die Mischung leitfähiger Partikel, enthaltend dasMetall von Interesse, eine schwere nicht-eisenhaltige Mischung von Partikeln, stammend vom Zerkleinern oder Verbrennen von Abfall und Sekundärströmen, umfasst, wobei vorzugsweise die Mischung von Partikeln Kupfer, Zink, und Gold umfasst, und die Partikelgrößen vorzugsweise weniger als 40 mm, bevorzugter weniger als 15 mm, am bevorzugtesten weniger als 3 mm sind, und wodurch vorzugsweise keine Partikel kleiner als 1 µm, bevorzugter kleiner als 100 µm vorhanden sind.

11. Verfahren nach einem der Ansprüche 2 - 10, wobei das Metall von Interesse Kupfer umfasst, das weniger edle Metall Zink umfasst und/oder das edlere Metall Gold umfasst.

12. Vorrichtung zum Durchführen eines Verfahrens nach einem der Ansprüche 1 - 11, umfassend:
- eine Auflösungseinheit, die eine Öffnung zum Zuführen eines leitfähigen Zufuhrstroms, im Besonderen einer schweren nicht-eisenhaltigen Mischung von Partikeln, erzeugt durch Zerkleinern oder Verbrennen von Abfall und Sekundärströmen, umfasst;
- eine Raffiniereinheit, die eine Leitung zum Aufnehmen des Abflusses der Auflösungseinheit umfasst;
- vorzugsweise ferner umfassend eine Elektrolytfiltrationseinheit, die eine Leitung zum Aufnehmen des Abflusses der Raffiniereinheit umfasst.

13. Vorrichtung nach Anspruch 12, ferner umfassend eine Elektrolytbehandlungseinheit, die eine Leitung zum Aufnehmen des verbrauchten Elektrolyten umfasst.

14. Vorrichtung nach einem der Ansprüche 12 bis 13, wobei die Raffiniereinheit eine Elektro-Raffiniereinheit ist, die mehrere perforierte Platten umfasst, bildend eine oder mehrere Kammern, die den leitfähigen Strom als Anode enthalten, wobei neben der einen oder den mehreren Kammern eine Kathode vorhanden ist, vorzugsweise derart beabstandet ist, dass der leitfähige Strom vom Eintreten in den Raum zwischen der Kammer und der Kathode beim Zuführen mit einem Werkzeug abgehalten werden kann.

15. Vorrichtung nach einem der Ansprüche 12 bis 14, die die von einer oder mehreren Einheiten dimensionierte Größe einer Palettenbox umfasst, ausgerüstet mit Öffnungen, so dass sie von einem Gabelstapler, oder anderen Hebevorrichtung gehoben und gedreht werden kann.

## Revendications

1. Procédé pour récupérer un métal d'intérêt dans un mélange de particules conductrices contenant ledit métal d'intérêt, ainsi qu'au moins un métal moins noble, lequel procédé comprend les étapes suivantes :
a) introduire ledit mélange de particules conductrices dans une unité de séparation, dans laquelle le métal moins noble est séparé par lixiviation sélective, en produisant ainsi un courant concentré comprenant le métal moins noble et un courant conducteur comprenant le métal d'intérêt ;
b) suivie d'une étape consistant à séparer le métal d'intérêt dudit courant conducteur par raffinage électrolytique, pour produire un courant comprenant le métal d'intérêt et un courant de matériaux conducteurs concentrés.

2. Procédé selon la revendication 1, qui est suivi d'une étape c) consistant à séparer au moins un métal noble supplémentaire dudit courant conducteur concentré, en produisant ainsi un courant de métaux plus nobles concentrés et un second courant de matériaux conducteurs concentrés.

3. Procédé selon la revendication 1 ou 2, dans lequel ladite étape de séparation d'un ou de plusieurs métaux d'intérêt dudit courant conducteur par raffinage électrolytique est réalisée dans une cellule électrochimique, comprenant une anode et une cathode, en présence d'un électrolyte comprenant un ou plusieurs acides ou agents complexants, dans lequel ledit courant conducteur est l'anode et le métal d'intérêt est plaqué sur la cathode.

4. Procédé selon la revendication 3, dans lequel l'électrolyte est utilisé et au moins une partie de l'électrolyte usé est employé dans la séparation du métal moins noble.

5. Procédé selon la revendication 3 ou 4, suivi d'une étape de traitement d'au moins une partie de l'électrolyte usé et de réutilisation de l'électrolyte traité résultant dans la cellule électrochimique.

6. Procédé selon l'une quelconque des revendications 2 à 5, dans lequel ladite étape de séparation du métal plus noble comprend une filtration.

7. Procédé selon l'une quelconque des revendications précédentes, dans lequel ladite étape de séparation du métal moins noble comprend le fait de dissoudre et d'oxyder les métaux moins nobles en utilisant un ou plusieurs acides ou agents complexants.

8. Procédé selon l'une quelconque des revendications 5 à 6, dans lequel ladite étape de traitement d'au moins une partie de l'électrolyte usé comprend la dissolution et l'oxydation des métaux d'intérêt (non encore récupérés) par l'emploi d'un accepteur d'électrons, ledit accepteur d'électrons étant de préférence un gaz contenant de l'oxygène, de préférence encore, de l'air.

9. Procédé selon l'une quelconque des revendications précédentes, dans lequel lesdits un ou plusieurs acides ou agents complexants compris dans l'électrolyte sont choisis dans le groupe comprenant H₂SO₄, HCl, HNO₃, NH₃, CN-, OH- et leurs combinaisons.

10. Procédé selon l'une quelconque des revendications précédentes, dans lequel ledit mélange de particules conductrices contenant ledit métal d'intérêt comprend un mélange de particules lourd non ferreux provenant du déchiquetage ou de l'incinération de déchets et de courants secondaires, ledit mélange de particules comprenant de préférence du cuivre, du zinc et de l'or, et la taille des particules étant de préférence inférieure à 40 mm, de préférence encore inférieure à 15 mm, mieux encore inférieure à 3 mm, et dans lequel de préférence aucune particule de taille inférieure à 1 µm, de préférence encore de taille inférieure à 100 µm, n'est présente.

11. Procédé selon l'une quelconque des revendications 2 à 10, dans lequel ledit métal d'intérêt comprend du cuivre, ledit métal moins noble comprend du zinc et/ou ledit métal plus noble comprend de l'or.

12. Dispositif permettant d'exécuter un procédé selon l'une quelconque des revendications 1 à 11, comprenant :
- une unité de dissolution, qui comprend une ouverture permettant d'introduire un courant d'alimentation conducteur, notamment un mélange de particules lourd non ferreux produit par déchiquetage ou incinération de déchets et de courants secondaires ;
- une unité de raffinage, qui comprend une conduite destinée à recevoir l'effluent de ladite unité de dissolution ;
- comprenant en outre de préférence une unité de filtration d'électrolyte, qui comprend une conduite destinée à recevoir l'effluent de ladite unité de raffinage.

13. Dispositif selon la revendication 12, comprenant en outre une unité de traitement d'électrolyte, qui comprend une conduite destinée à recevoir l'électrolyte usé.

14. Dispositif selon l'une quelconque des revendications 12 à 13, dans lequel ladite unité de raffinage est une unité de raffinage électrolytique qui comprend plusieurs plaques perforées formant un ou plusieurs compartiments qui contiennent le courant conducteur en tant qu'anode, une cathode étant présente en position adjacente à un ou plusieurs compartiments, de préférence espacée, de sorte que le courant conducteur peut être empêché d'entrer dans l'espace situé entre le compartiment et la cathode lors de l'introduction à l'aide d'un outil.

15. Dispositif selon l'une quelconque des revendications 12 à 14, comprenant une ou plusieurs unités ayant les dimensions d'une caisse-palette, pourvu d'ouvertures qui lui permettent d'être levé et mis la tête en bas par un chariot élévateur à fourche, ou par un autre appareil de levage.
